(19) Europäisches Patentamt
European Patent Office
Office européen des brevets

(11) EP 4 489 052 A1

(12) **EUROPEAN PATENT APPLICATION**

(43) Date of publication:
08.01.2025 Bulletin 2025/02

(51) International Patent Classification (IPC):
H01J 61/34 (2006.01)   H01J 61/82 (2006.01)
C02F 1/32 (2023.01)   F21V 15/04 (2006.01)
H01J 5/48 (2006.01)

(21) Application number: 24157505.9

(22) Date of filing: 14.02.2024

(52) Cooperative Patent Classification (CPC):
H01J 61/34; C02F 1/325; H01J 5/48; F21V 15/04;
H01J 61/82

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH MA MD TN

(30) Priority: 04.07.2023 JP 2023110154

(71) Applicant: Toshiba Lighting & Technology
Corporation
Yokosuka-shi, Kanagawa 237-8510 (JP)

(72) Inventor: YAMADA, Kazuki
Imabari-shi
Ehime 794-8510 (JP)

(74) Representative: AWA Sweden AB
Box 5117
200 71 Malmö (SE)

(54) **DISCHARGE LAMP AND PROCESSING DEVICE**

(57)     [Abstract] Provided are a discharge lamp and a processing device capable of suppressing damage to at least one a luminous tube and a protection tube when vibration is applied to the discharge lamp.

[Problem] A discharge lamp according to an embodiment includes: a protection tube having a tubular shape and extending in a first direction; a luminous tube provided inside the protection tube and extending in the first direction; a first electrode provided at a first end of the luminous tube; a second electrode provided at a second end of the luminous tube facing the first end; a first holder provided inside the protection tube to hold the first end of the luminous tube; a second holder provided inside the protection tube to hold the second end of the luminous tube; a first wire provided inside the protection tube and electrically connected to the first electrode; a second wire provided inside the protection tube and electrically connected to the second electrode; a holding material extending in the first direction between the first holder and the second holder inside the protection tube and holding the second wire; and at least one support portion provided between the first holder and the second holder inside the protection tube to support the holding material. The support portion includes a holding portion having a tubular shape and provided with the holding material; and an arm surrounding an outer wall of the luminous tube in a second direction perpendicular to the first direction and joined to the holding portion.

FIG. 1

**Description**

Technical Field

Embodiments of the present invention relate to a discharge lamp and a processing device.

Background Art

There is a discharge lamp that radiates light such as ultraviolet light. Such a discharge lamp may be used, for example, in a processing device that causes a chemical reaction such as a polymerization reaction. In this case, the discharge lamp is immersed in a liquid to be treated stored in a treatment tank. Therefore, the discharge lamp has, for example, a double tube structure including a luminous tube and a protection tube. In this case, the luminous tube that generates light is provided inside the protection tube. Therefore, the liquid can be inhibited from reaching the luminous tube by the protection tube.

Further, an electrode is provided at each of ends on both sides of the luminous tube. Since the discharge lamp is immersed in the liquid, it is necessary to supply power to a pair of electrodes from the end side of the discharge lamp located outside the treatment tank. Therefore, a wire for supplying power to an electrode provided on the end side of the luminous tube located inside the treatment tank is provided between an inner wall of the protection tube and an outer wall of the luminous tube. Further, a holding material for holding the wire is provided between the inner wall of the protection tube and the outer wall of the luminous tube. The wire and the holding material extend in a tube axis direction of the protection tube (luminous tube).

Here, vibration may be applied to the discharge lamp when transporting the discharge lamp or attaching the discharge lamp to the treatment tank. In addition, vibration may be applied to the discharge lamp via the treatment tank, etc. When vibration is applied to the discharge lamp, the holding material may vibrate and collide with at least one of the luminous tube and the protection tube. In this case, a light emission length of the discharge lamp provided in the processing device becomes longer, and thus a length of the holding material becomes longer. As the length of the holding material increases, the amplitude of the holding material increases, so that the holding material easily collides with the luminous tube and the protection tube.

In this case, since the holding material is made of quartz glass, etc., the mass becomes large. Therefore, a speed at which the holding material collides with the luminous tube and the protection tube increases, and at least one of the luminous tube and the protection tube may be damaged.

Therefore, it has been desired to develop technology that can suppress damage to at least one of the luminous tube and the protection tube when vibration is applied to the discharge lamp.

Patent Literature

[Patent Literature 1] JP2002-110101A

Summary of Invention

Problem to be Solved by Invention

A problem to be solved by the invention is to provide a discharge lamp and a processing device that can suppress damage to at least one of a luminous tube and a protection tube when vibration is applied to the discharge lamp.

[Means for Solving Problem]

A discharge lamp according to an embodiment includes: a protection tube having a tubular shape and extending in a first direction; a luminous tube provided inside the protection tube and extending in the first direction; a first electrode provided at a first end of the luminous tube; a second electrode provided at a second end of the luminous tube facing the first end; a first holder provided inside the protection tube to hold the first end of the luminous tube; a second holder provided inside the protection tube to hold the second end of the luminous tube; a first wire provided inside the protection tube and electrically connected to the first electrode; a second wire provided inside the protection tube and electrically connected to the second electrode; a holding material extending in the first direction between the first holder and the second holder inside the protection tube and holding the second wire; and at least one support portion provided between the first holder and the second holder inside the protection tube to support the holding material. The support portion includes: a holding portion having a tubular shape and provided with the holding material; and an arm surrounding an outer wall of the luminous tube in a second direction perpendicular to the first direction and joined to the holding portion.

Advantageous Effects of Invention

According to the embodiments of the invention, it is possible to provide a discharge lamp and a processing device that can suppress damage to at least one of a luminous tube and a protection tube when vibration is applied to the discharge lamp.

Brief Description of Drawings

[FIG. 1]

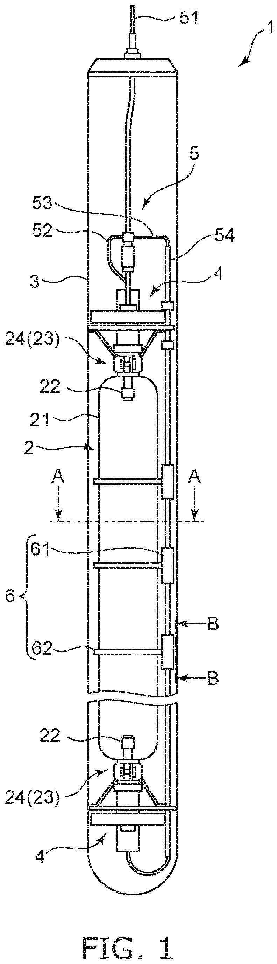

FIG. 1 is a schematic partial cross-sectional view illustrating a discharge lamp according to an embodiment.
[FIG. 2]

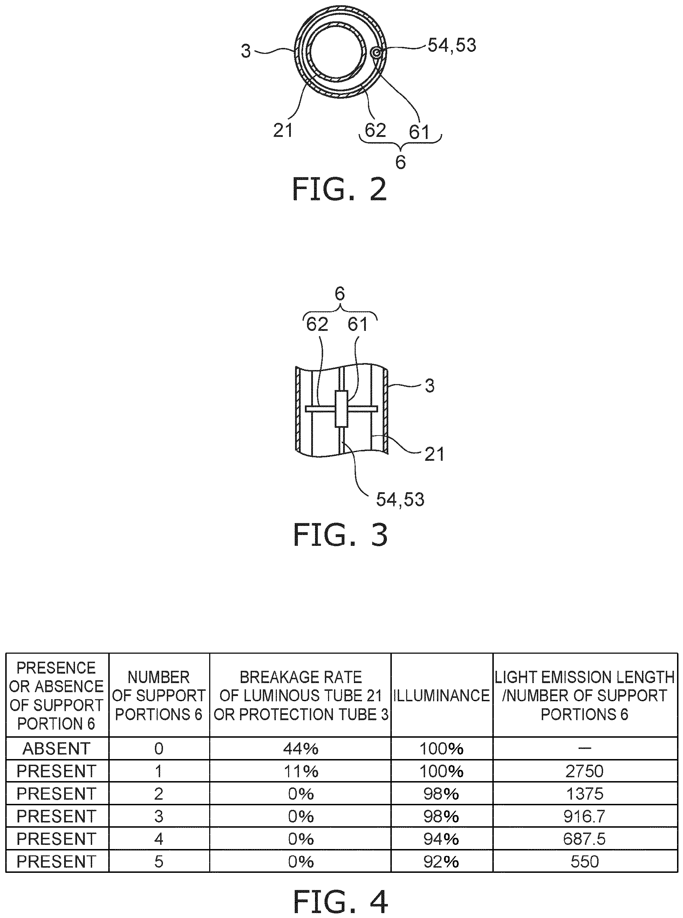

FIG. 2 is a schematic cross-sectional view of a support portion in a direction of line A-A in FIG. 1.
[FIG. 3]
FIG. 3 is a schematic arrow view of the support portion in a direction of line B-B in FIG. 1.
[FIG. 4]
FIG. 4 is a table for illustrating effects of the support portion.
[FIG. 5]

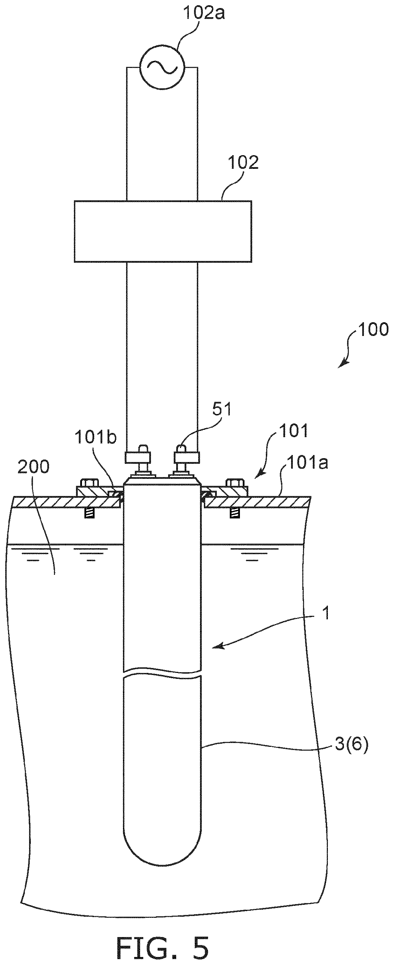

FIG. 5 is a schematic diagram for illustrating a processing device provided with the discharge lamp according to this embodiment.

Embodiments of Invention

Hereinafter, embodiments will be illustrated with reference to the drawings. Note that in each drawing, similar components are denoted by the same reference numerals, and detailed descriptions are omitted as appropriate.

(Discharge lamp)

Hereinafter, as an example, a description will be given of a discharge lamp having a double tube structure including a luminous tube having an interior space for generating light and a protection tube having an interior space in which the luminous tube is stored. However, the discharge lamp may have a multi-tube structure. For example, the discharge lamp may be a discharge lamp having a triple tube structure further including a tube between the luminous tube and the protection tube.

FIG. 1 is a schematic partial cross-sectional view illustrating a discharge lamp 1 according to this embodiment.

As illustrated in FIG. 1, the discharge lamp 1 can include, for example, a light-emitting portion 2, a protection tube 3, a holder 4 (corresponding to an example of a first holder and a second holder), a power supply portion 5, and a support portion 6.

The light-emitting portion 2 can be, for example, a so-called high-intensity discharge (HID) lamp such as a mercury lamp, a metal halide lamp, or a high-pressure sodium lamp. However, the light-emitting portion 2 is not limited to the HID lamp.

Further, a light emission length of the discharge lamp 1 can be, for example, 2000 mm or more. The light emission length is, for example, a distance between tips of a pair of electrodes 22 (corresponding to an example of a first electrode and a second electrode). A rated lamp voltage of the discharge lamp 1 is, for example, about 2400 V. The rated current of the discharge lamp 1 is, for example, about 4.5 A.

The light-emitting portion 2 includes, for example, a luminous tube 21, the electrodes 22, an outer lead 23, and a base 24.

The luminous tube 21 has, for example, a cylindrical shape. The luminous tube 21 has a longer length in a tube axis direction (a direction in which the luminous tube 21 extends; this corresponds to an example of a first direction) than a tube outer diameter. Both ends of the luminous tube 21 (corresponding to an example of a first end and a second end) are sealed. The both ends of the luminous tube 21 can be sealed using, for example, a pinch seal method or a shrink seal method. The interior space of the luminous tube 21 is enclosed with a discharge medium for generating light having a predetermined wavelength. A wavelength of light radiated from the light-emitting portion 2 can be changed depending on the composition of the discharge medium. For example, when ultraviolet light is generated, the discharge medium can include a rare gas such as argon gas and mercury. In addition, the discharge medium may further include metal halides including iron, tin, iodine, etc.

For example, the luminous tube 21 is made of quartz glass. In this case, for example, the luminous tube 21 can be made of transparent, that is, uncolored quartz glass. An outer diameter dimension of the luminous tube 21 is, for example, about 28 mm.

The pair of electrodes 22 is provided facing each other. The electrodes 22 are held in sealed parts at the ends of the luminous tube 21. One end side of the electrode 22 has a coil shape and is provided in an internal space of the luminous tube 21. The other end of the electrode 22 has a linear shape and is provided inside a sealed part of the luminous tube 21. The electrode 22 contains, for example, tungsten or thoriated tungsten as a main component.

The outer lead 23 has a linear shape, and one outer lead 23 is provided for one electrode 22. One end of the outer lead 23 is provided inside a sealed part of the luminous tube 21. Moreover, molybdenum foil is provided inside a sealed part of the luminous tube 21. The electrode 22 and the outer lead 23 are electrically connected to each other via the molybdenum foil. For example, the outer lead 23 contains molybdenum as a main component.

One base 24 is provided for one outer lead 23. For example, the base 24 has a cylindrical shape, one end thereof is closed, and the other end thereof is open. A hole for passing a wire 52 is provided at the closed-side end of the base 24. An end of the sealed part of the luminous tube 21 is provided at the open-side end of the base 24. Inside the base 24, the outer lead 23 and the wire 52 are electrically connected to each other. Furthermore, the inside of the base 24 is filled with an insulating material containing aluminum oxide, etc. For example, the base 24 can be formed using metal such as stainless steel.

The protection tube 3 has, for example, a cylindrical shape. Ends on both sides of the protection tube 3 are closed. An internal space of the protection tube 3 is filled with nitrogen or an inert gas such as a rare gas. When the discharge lamp 1 is attached to a treatment tank 101 of the processing device 100, for example, an end of the protection tube 3 where a power supply pin 51 is provided is provided outside the treatment tank 101, and an end on the opposite side thereof is provided inside the treatment tank 101 (for example, see FIG. 5).

The protection tube 3 has a longer length in the tube axis direction (a direction in which the protection tube 3 extends) than the tube outer diameter. The light-emitting portion 2 is provided inside the protection tube 3. In this case, the tube axis direction of the luminous tube 21 can be approximately parallel to the tube axis direction of the protection tube 3. Moreover, an inner diameter of the protection tube 3 is larger than an outer diameter of the luminous tube 21. A length of the protection tube 3 in the tube axis direction is longer than a length of the luminous tube 21 in the tube axis direction. An external shape dimension of the protection tube 3 is, for example, about 60 mm. For example, the protection tube 3 can be formed using borosilicate glass. Note that, for example, a material of the protection tube 3 can be made the same as a material of the luminous tube 21.

For example, a pair of holders 4 can be provided inside the protection tube 3. Inside the protection tube 3, for example, the holders 4 hold the ends of the luminous tube 21. In this case, for example, the holders 4 can hold the sealed parts of the luminous tube 21. When the holders 4 are provided, a position of the light-emitting portion 2 (luminous tube 21) with respect to the protection tube 3 can be maintained. The holders 4 include, for example, a disc-shaped member and an elastic member such as a leaf spring. When the elastic member is provided, the light-emitting portion 2 (luminous tube 21) and the protection tube 3 can be protected from thermal expansion and contraction caused by turning on and off the discharge lamp 1, vibrations applied to the discharge lamp 1, etc. The holders 4 can be formed from a heat-resistant material. For example, the holders 4 are made of stainless steel.

The power supply portion 5 includes, for example, the power supply pin 51, the wire 52 (corresponding to an example of a first wire), a wire 53 (corresponding to an example of a second wire), and a holding material 54.

A pair of power supply pins 51 is provided (for example, see FIG. 5). Note that FIG. 1 is the case where the discharge lamp 1 is viewed from a direction in which the pair of power supply pins 51 is arranged.

The pair of power supply pins 51 is provided at one end of the protection tube 3. The pair of power supply pins 51 extends in the tube axis direction of the protection tube 3. One end of each of the power supply pins 51 is provided outside the protection tube 3. The other end of each of the power supply pins 51 is provided inside the protection tube 3. For example, the power supply pins 51 can be formed using copper, etc.

The wire 52 is provided inside the protection tube 3. One end of the wire 52 is electrically connected to the outer lead 23 inside one base 24. That is, the wire 52 is electrically connected to one electrode 22 via the outer lead 23. The other end of the wire 52 is electrically connected to one power supply pin 51.

The wire 53 is provided inside the protection tube 3. As illustrated in FIG. 1, the wire 53 extends in the tube axis direction of the luminous tube 21 between the holders 4 inside the protection tube 3. One end of the wire 53 is electrically connected to the outer lead 23 inside the other base 24. That is, the wire 53 is electrically connected to the other electrode 22 via the outer lead 23. The other end of the wire 53 is electrically connected to the other power supply pin 51.

For example, the wire 52 and the wire 53 can be conductors having a wire diameter of about 0.05 to 2.0 mm. The wires 52 and 53 can be, for example, nickel wires, tungsten wires, rhenium wires, molybdenum wires, tantalum wires, alloy wires containing these metals as main components (for example, tungsten-rhenium alloy wires), etc.

Each of the ends on both sides of the holding material 54 is held by the holder 4. The holding material 54 holds the wire 53. For example, the holding material 54 has a tubular shape and extends in the tube axis direction of the luminous tube 21 between the holders 4 inside the protection tube 3. For example, the wire 53 can be provided inside the holding material 54 having the tubular shape. The wire 53 extends inside the holding material 54 in the tube axis direction of the luminous tube 21.

Further, the holding material 54 may have a columnar shape and extend inside the protection tube 3 in the tube axis direction of the luminous tube 21. In this case, the wire 53 can be held on an outer surface of the holding material 54. The wire 53 extends on an outer surface of the holding material 54 in the tube axis direction of the luminous tube 21. For example, a plurality of anchors each having a linear shape can be provided side by side on the outer surface of the holding material 54, and the wire 53 can be held by the plurality of anchors.

The holding material 54 is preferably made of a material that can transmit light radiated from the light-emitting portion 2. In this way, it is possible to prevent light radiated from the light-emitting portion 2 from being blocked by the holding material 54. Therefore, efficiency of extracting light radiated from the light-emitting portion 2 can be improved. The holding material 54 can be made of, for example, quartz glass or ceramics such as aluminum oxide. A cross-sectional dimension of the holding material 54 in a direction perpendicular to a direction in which the holding material 54 extends can be, for example, about 5 mm.

Here, vibration may be applied to the discharge lamp 1 when the discharge lamp 1 is transported or when the discharge lamp 1 is attached to the treatment tank 101. Further, vibration may be applied to the discharge lamp 1 via the treatment tank 101, etc. When vibration is applied to the discharge lamp 1, the holding material 54 extending inside the protection tube 3 vibrates.

As described above, the ends on both sides of the holding material 54 are held by the holders 4. Further, the light emission length of the discharge lamp 1 is, for example, 2000 mm or more. The cross-sectional dimension of the holding material 54 is, for example, about 5 mm. Therefore, vibration tends to occur in the holding material 54, and the amplitude of the generated vibration tends to increase. As the amplitude of the generated vibration increases, the holding material 54 tends to collide with at least one of the luminous tube 21 and the protection tube 3.

Furthermore, the holding material 54 is made of quartz glass, etc., and thus has a large mass. Therefore, when the holding material 54 collides with at least one of the luminous tube 21 and the protection tube 3, at least one of the luminous tube 21 and the protection tube 3 is likely to be damaged.

In this case, the amplitude of the generated vibration can be reduced by increasing the cross-sectional dimension of the holding material 54 or by changing a material of the holding material 54. However, in this case, light radiated from the light-emitting portion 2 is likely to be blocked by the holding material 54. Therefore, a new problem arises in that efficiency of extracting light radiated from the light-emitting portion 2 is reduced.

Therefore, the discharge lamp 1 according to this embodiment is provided with the support portion 6 that supports the holding material 54. The support portion 6 is provided between the holders 4 inside the protection tube 3. At least one support portion 6 can be provided. The discharge lamp 1 illustrated in FIG. 1 is provided with a plurality of support portions 6. When the plurality of support portions 6 is provided, the plurality of support portions 6 can be provided side by side in the tube axis direction of the luminous tube 21 at a predetermined interval.

FIG. 2 is a schematic cross-sectional view of the support portion 6 in a direction of line A-A in FIG. 1.

FIG. 3 is a schematic arrow view of the support portion 6 in a direction of line B-B in FIG. 1.

As illustrated in FIGS. 1 to 3, the support portion 6 includes, for example, a holding portion 61 and an arm 62.

For example, the holding portion 61 has a tubular shape, and extends in the tube axis direction of the luminous tube 21. The holding material 54 and the wire 53 are provided inside the holding portion 61. Note that as long as the holding material 54 and the wire 53 can be held, a slit extending in the tube axis direction of the luminous tube 21 may be provided in the holding portion 61. An inner wall of the holding portion 61 and an outer wall of the holding material 54 may be in contact with each other, or there may be a gap between the inner wall of the holding portion 61 and the outer wall of the holding material 54. An outer wall of the holding portion 61 and an inner wall of the protection tube 3 may be in contact with each other, or there may be a gap between the outer wall of the holding portion 61 and the inner wall of the protection tube 3. For example, the holding portion 61 can be a cylinder having an outer diameter dimension of about 8 mm, an inner diameter dimension of about 6 mm, and a length of about 12 mm. The holding portion 61 is formed from a heat-resistant material. The holding portion 61 can be made of, for example, stainless steel or ceramics.

For example, the arm 62 surrounds the outer wall of the luminous tube 21 in a direction (corresponding to an example of a second direction) perpendicular to the tube axis direction of the luminous tube 21. A part of the arm 62 has, for example, an open ring shape (C-shaped ring shape). The arm 62 is joined to the holding portion 61. For example, an open-side end of the arm 62 is joined to a side surface of the holding portion 61. For example, the open-side end of the arm 62 can be welded to the side surface of the holding portion 61. The arm 62 is provided between the inner wall of the protection tube 3 and the outer wall of the luminous tube 21. The arm 62 and the inner wall of the protection tube 3 may be in contact with each other, or there may be a gap between the arm 62 and the inner wall of the protection tube 3. The arm 62 and the outer wall of the luminous tube 21 may be in contact with each other, or there may be a gap between the arm 62 and the outer wall of the luminous tube 21. However, when the entire circumference of the arm 62 is in contact with the outer wall of the luminous tube 21, thermal stress generated between the arm 62 and the luminous tube 21 becomes large as the discharge lamp 1 (the light-emitting portion 2) turns on and off. When the thermal stress becomes excessively large, there is concern that at least one of the arm 62 and the luminous tube 21 may be damaged. Therefore, it is preferable that a gap be provided between the arm 62 and the outer wall of the luminous tube 21 over at least a portion of the entire circumference of the arm 62.

For example, the arm 62 may have a linear shape or a band shape. However, when the length of the arm 62 becomes longer in the tube axis direction of the luminous tube 21, light radiated from the light-emitting portion 2 becomes more likely to be blocked. In this case, when the arm 62 has the linear shape, the length of the arm 62 can be shortened in the tube axis direction of the luminous tube 21. Therefore, it is preferable that the arm 62 is made of a linear member. The arm 62 is formed from a heat-resistant material. The arm 62 can be made of, for example, a stainless steel wire having a wire diameter of about 1 mm. An outer diameter dimension of the arm 62 can be, for example, about 50 mm.

Next, functions and effects of the support portion 6 will be described.

As mentioned above, the holding material 54 and the wire 53 are provided inside the holding portion 61. Therefore, when vibration is applied to the discharge lamp 1, the holding portion 61 comes into contact with the outer wall of the luminous tube 21 or the inner wall of the protection tube 3. In this case, a distance between the holding portion 61 and the outer wall of the luminous tube 21 is smaller than a distance between the holding material 54 and the outer wall of the luminous tube 21. A distance between the holding portion 61 and the inner wall of the protection tube 3 is smaller than a distance between the holding material 54 and the inner wall of the protection tube 3. Therefore, a speed when the holding portion 61 collides with the outer wall of the luminous tube 21 or the inner wall of the protection tube 3 is lower than a speed when the holding material 54 collides with the outer wall of the luminous tube 21 or the inner wall of the protection tube 3.

Further, when the arm 62 is provided, the arm 62 comes into contact with at least one of the outer wall of the luminous tube 21 and the inner wall of the protection tube 3 when vibration is applied to the discharge lamp 1. Therefore, since movement of the holding portion 61 is suppressed, it is possible to inhibit the holding portion 61 from colliding with the outer wall of the luminous tube 21 or the inner wall of the protection tube 3, and further reduce the speed at the time of collision.

Furthermore, the amplitude of a beam increases as a distance between fulcrums increases. Therefore, when the support portion 6 is not provided, the pair of holders 4 serve as fulcrums, so that the amplitude of the holding material 54 increases, and the holding material 54 is likely to collide with the outer wall of the luminous tube 21 or the inner wall of the protection tube 3.

On the other hand, when the support portion 6 is provided, the support portion 6 and the holder 4 serve as fulcrums, so that it is possible to inhibit the amplitude of the holding material 54 from increasing. Therefore, when vibration is applied to the discharge lamp 1, it is possible to inhibit the holding material 54 from colliding with the outer wall of the luminous tube 21 or the inner wall of the protection tube 3.

FIG. 4 is a table for illustrating effects of the support portion 6.

FIG. 4 is the case where the discharge lamp 1 has the light emission length of 2750 mm, the rated lamp voltage of 2400 V, and the rated current of 4.5 A, the outer diameter dimension of the luminous tube 21 is 28 mm, the external shape dimension of the protection tube 3 is 60 mm, and the cross-sectional dimension of the holding material 54 is 5 mm. The number of samples is 9. Further, an effective value of vibration acceleration applied to the discharge lamp 1 is 9.8 m/s$^2$.

As can be seen from FIG. 4, when the support portion 6 is provided, it is possible to reduce a breakage rate of the luminous tube 21 or the protection tube 3.

In this case, when the number of support portions 6 is increased, the breakage rate of the luminous tube 21 or protection tube 3 can be further reduced. However, when the number of support portions 6 is increased, light radiated from the light-emitting portion 2 is likely to be blocked, and thus illuminance of the discharge lamp 1 is likely to decrease.

Therefore, in consideration of reducing the breakage rate and suppressing the reduction in the illuminance of the discharge lamp 1, it is preferable to satisfy the following inequality.

$$916 \text{ (mm/pieces)} \leq L \text{ (mm)}/N \text{ (pieces)} \leq 1375 \text{ (mm/pieces)}$$

Note that L (mm) denotes the light emission length. N (pieces) denotes the number of support portions 6. N (pieces) is a positive number of 2 or more.

As described above, when the support portion 6 is provided, it is possible to suppress damage to at least one of the luminous tube 21 and the protection tube 3 when vibration is applied to the discharge lamp 1. In addition, when "916 (mm/pieces) ≤ L (mm)/N (pieces) ≤ 1375 (mm/pieces)", it is possible to reduce the breakage rate and suppress the decrease in the illuminance of the discharge lamp 1.

(Processing device)

FIG. 5 is a schematic diagram for illustrating a processing device 100 provided with the discharge lamp 1 according to this embodiment.

Note that in FIG. 5, the processing device 100 that causes a chemical reaction such as a polymerization reaction is illustrated as an example. However, the processing device 100 is not limited to one that causes a chemical reaction. For example, the processing device 100 can also sterilize water, decompose organic matter contained in water, etc.

As illustrated in FIG. 5, the processing device 100 includes, for example, the treatment tank 101, a lighting device 102, and the discharge lamp 1.

A liquid 200 to be treated is stored inside the treatment tank 101. A region of the discharge lamp 1 where the light-emitting portion 2 is provided is immersed in the liquid 200 stored in the treatment tank 101. As described above, since the light-emitting portion 2 is provided inside the protection tube 3, it is possible to inhibit the liquid 200 from reaching the light-emitting portion 2. For example, the discharge lamp 1 can be attached to a ceiling 101a of the treatment tank 101 via a holder 101b so as to be liquid-tight. In this case, the discharge lamp 1 is immersed in the liquid 200 in a substantially vertical posture. Note that the discharge lamp 1 can also be provided, for example, on a side surface or at a bottom of the treatment tank 101. When the discharge lamp 1 is provided on the side surface of the treatment tank 101, the discharge lamp 1 is, for example, immersed in the liquid 200 in a substantially horizontal posture.

The lighting device 102 is provided outside the treatment tank 101. The lighting device 102 includes, for example, a step-up transformer and a stabilizer. For example, an input side of the lighting device 102 is electrically connected to an AC power source 102a provided in a factory, etc. An output side of the lighting device 102 is electrically connected to the power supply pin 51 of the discharge lamp 1 outside the treatment tank 101.

When a voltage is applied to the power supply pin 51 of the discharge lamp 1 by the lighting device 102, for example, a discharge occurs between the pair of electrodes 22, and light (for example, ultraviolet light) having a predetermined wavelength depending on the composition of the discharge medium sealed in the internal space of the luminous tube 21 is radiated from the light-emitting portion 2. The light radiated from the light-emitting portion 2 is radiated to the liquid 200 via the protection tube 3. When the light having the predetermined wavelength is radiated to the liquid 200, the liquid 200 is subjected to a predetermined process (for example, a chemical reaction such as a polymerization reaction, a sterilization, decomposition of organic matter, etc.).

Even though several embodiments of the invention have been illustrated above, these embodiments are presented as examples and are not intended to limit the scope of the invention. These novel embodiments can be implemented in various other forms, and various omissions, substitutions, changes, etc. can be made without departing from the gist of the invention. These embodiments and modifications thereof are included within the scope and gist of the invention, as well as within the scope of the invention described in the claims and equivalents thereto. Further, each of the embodiments described above can be implemented in combination with each other.

[Reference Signs List]

1: discharge lamp, 2: light-emitting portion, 3: protection tube, 4: holder, 5: power supply portion, 6: support portion, 21: luminous tube, 22: electrode, 52: wire, 53: wire, 54: holding material, 61: holding portion, 62: arm, 100: processing device, 101: treatment tank, 200: liquid

**Claims**

1. A discharge lamp (1) comprising:

   a protection tube (3) having a tubular shape and extending in a first direction;
   a luminous tube (21) provided inside the protection tube (3) and extending in the first direction;
   a first electrode (22) provided at a first end of the luminous tube (21);
   a second electrode (22) provided at a second end of the luminous tube (21) facing the first end;
   a first holder (4) provided inside the protection tube (3) to hold the first end of the luminous tube (21);
   a second holder (4) provided inside the protection tube (3) to hold the second end of the luminous tube (21);
   a first wire (52) provided inside the protection tube (3) and electrically connected to the first electrode (22);
   a second wire (53) provided inside the protection tube (3) and electrically connected to the second electrode (22);
   a holding material (54) extending in the first direction between the first holder (4) and the second holder (4) inside the protection tube (3) and holding the second wire (53); and
   at least one support portion (6) provided between the first holder (4) and the second holder (4) inside the protection tube (3) to support the holding material (54),
   wherein the support portion (6) comprises:

      a holding portion (61) having a tubular shape and provided with the holding material (54); and
      an arm (62) surrounding an outer wall of the luminous tube (21) in a second direction perpendicular to the first direction and joined to the holding portion (61).

2. The discharge lamp (1) according to claim 1, wherein, when a light emission length of the luminous tube (21) is set to L (mm), and the number of support portions (6) is set to N (pieces), the following equation is satisfied:

$$916 \text{ (mm/pieces)} \le L \text{ (mm)}/N \text{ (pieces)} \le 1375 \text{ (mm/pieces)},$$

where N (pieces) denotes a positive integer of 2 or more.

3. The discharge lamp (1) according to claim 1 or 2, wherein a part of the arm (62) has an open ring shape, and an end of the arm (62) on an open side is joined to a side surface of the holding portion (61).

4. The discharge lamp (1) according to any one of claims 1 to 3, wherein the arm (62) includes a linear member.

5. A processing device (100) comprising:

the discharge lamp (1) according to any one of claims 1 to 4; and
a treatment tank (101) to which the discharge lamp (1) is attached and in which a liquid (200) to be treated is stored.

FIG. 1

FIG. 2

FIG. 3

| PRESENCE OR ABSENCE OF SUPPORT PORTION 6 | NUMBER OF SUPPORT PORTIONS 6 | BREAKAGE RATE OF LUMINOUS TUBE 21 OR PROTECTION TUBE 3 | ILLUMINANCE | LIGHT EMISSION LENGTH /NUMBER OF SUPPORT PORTIONS 6 |
|---|---|---|---|---|
| ABSENT | 0 | 44% | 100% | — |
| PRESENT | 1 | 11% | 100% | 2750 |
| PRESENT | 2 | 0% | 98% | 1375 |
| PRESENT | 3 | 0% | 98% | 916.7 |
| PRESENT | 4 | 0% | 94% | 687.5 |
| PRESENT | 5 | 0% | 92% | 550 |

FIG. 4

FIG. 5

Europäisches
Patentamt

European
Patent Office

Office européen
des brevets

# EUROPEAN SEARCH REPORT

**Application Number**

EP 24 15 7505

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 3 136 489 A (VLADIMIR OHARENKO) 9 June 1964 (1964-06-09) | 1-4 | INV. H01J61/34 |
| Y | * abstract * * column 1, line 7 - column 5, line 46; claims 1,6; figures 1-7 * | 5 | H01J61/82 C02F1/32 F21V15/04 H01J5/48 |
| A | US 3 707 645 A (GOOSSENS URBAAN PAUL MARGUERIT ET AL) 26 December 1972 (1972-12-26) * abstract * * figures 1-4 * | 1 | |
| Y | US 5 701 050 A (WOLF CHRISTOPH [DE] ET AL) 23 December 1997 (1997-12-23) * abstract * * column 1, lines 5-43 * * column 2, line 25 - column 3, line 50; figures 1-3 * | 5 | |
| A | JP 2003 168390 A (HARISON TOSHIBA LIGHTING CORP) 13 June 2003 (2003-06-13) * paragraphs [0001], [0027] - [0067]; figures 1-9 * | 1,5 | |

**TECHNICAL FIELDS SEARCHED (IPC)**

H01J
F21V
C02F

The present search report has been drawn up for all claims

| Place of search | Date of completion of the search | Examiner |
|---|---|---|
| Munich | 19 November 2024 | Lang, Thomas |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches
Patentamt

European
Patent Office

Office européen
des brevets

**Application Number**

EP 24 15 7505

---

## CLAIMS INCURRING FEES

The present European patent application comprised at the time of filing claims for which payment was due.

☐ Only part of the claims have been paid within the prescribed time limit. The present European search report has been drawn up for those claims for which no payment was due and for those claims for which claims fees have been paid, namely claim(s):

☐ No claims fees have been paid within the prescribed time limit. The present European search report has been drawn up for those claims for which no payment was due.

---

## LACK OF UNITY OF INVENTION

The Search Division considers that the present European patent application does not comply with the requirements of unity of invention and relates to several inventions or groups of inventions, namely:

see sheet B

☒ All further search fees have been paid within the fixed time limit. The present European search report has been drawn up for all claims.

☐ As all searchable claims could be searched without effort justifying an additional fee, the Search Division did not invite payment of any additional fee.

☐ Only part of the further search fees have been paid within the fixed time limit. The present European search report has been drawn up for those parts of the European patent application which relate to the inventions in respect of which search fees have been paid, namely claims:

☐ None of the further search fees have been paid within the fixed time limit. The present European search report has been drawn up for those parts of the European patent application which relate to the invention first mentioned in the claims, namely claims:

☐ The present supplementary European search report has been drawn up for those parts of the European patent application which relate to the invention first mentioned in the claims (Rule 164 (1) EPC).

Europäisches
Patentamt
European
Patent Office
Office européen
des brevets

# LACK OF UNITY OF INVENTION
## SHEET B

The Search Division considers that the present European patent application does not comply with the requirements of unity of invention and relates to several inventions or groups of inventions, namely:

1. claims: 1-4

        A discharge lamp comprising:
        a protection tube having a tubular shape and extending in a first direction;
        a luminous tube provided inside the protection tube and extending in the first direction;
        a first electrode provided at a first end of the luminous tube;
        a second electrode provided at a second end of the luminous tube facing the first end;
        a first holder provided inside the protection tube to hold the first end of the luminous tube;
        a second holder provided inside the protection tube to hold the second end of the luminous tube;
        a first wire provided inside the protection tube and electrically connected to the first electrode;
        a second wire provided inside the protection tube and electrically connected to the second electrode;
        a holding material extending in the first direction between the first holder and the second holder inside the protection tube and holding the second wire; and
        at least one support portion provided between the first holder and the second holder inside the protection tube to support the holding material,
        wherein the support portion comprises:
        a holding portion having a tubular shape and provided with the holding material; and
        an arm surrounding an outer wall of the luminous tube in a second direction perpendicular to the first direction and joined to the holding portion (claim 1),
         wherein, when a light emission length of the luminous tube is set to L (mm), and the number of support portions is set to N (pieces), the following equation is satisfied:
        916 (mm/pieces) <= L (mm)/N (pieces) <= 1375 (mm/pieces),
        where N (pieces) denotes a positive integer of 2 or more (claim 2).
                            - - -


    2. claim: 5

        A processing device comprising: the discharge lamp according to at least claim 1; and a treatment tank to which the discharge lamp is attached and in which a liquid to be treated is stored.
                            - - -

## ANNEX TO THE EUROPEAN SEARCH REPORT
## ON EUROPEAN PATENT APPLICATION NO.

EP 24 15 7505

This annex lists the patent family members relating to the patent documents cited in the above-mentioned European search report.
The members are as contained in the European Patent Office EDP file on
The European Patent Office is in no way liable for these particulars which are merely given for the purpose of information.

19-11-2024

| Patent document cited in search report | | Publication date | Patent family member(s) | | Publication date |
|---|---|---|---|---|---|
| US 3136489 | A | 09-06-1964 | NONE | | |
| US 3707645 | A | 26-12-1972 | AT | 330295 B | 25-06-1976 |
| | | | BE | 763571 A | 26-08-1971 |
| | | | CA | 923959 A | 03-04-1973 |
| | | | FR | 2079066 A5 | 05-11-1971 |
| | | | GB | 1340243 A | 12-12-1973 |
| | | | JP | S5317827 B1 | 10-06-1978 |
| | | | NL | 7102424 A | 31-08-1971 |
| | | | SE | 381373 B | 01-12-1975 |
| | | | US | 3707645 A | 26-12-1972 |
| US 5701050 | A | 23-12-1997 | AT | E151389 T1 | 15-04-1997 |
| | | | CA | 2147621 A1 | 15-09-1994 |
| | | | DE | 4307884 C1 | 11-05-1994 |
| | | | EP | 0688301 A1 | 27-12-1995 |
| | | | JP | 2746756 B2 | 06-05-1998 |
| | | | JP | H08503331 A | 09-04-1996 |
| | | | US | 5701050 A | 23-12-1997 |
| | | | WO | 9420418 A1 | 15-09-1994 |
| JP 2003168390 | A | 13-06-2003 | NONE | | |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2002110101 A